# EUROPEAN PATENT SPECIFICATION

(11) **EP 4 008 595 B1**
(45) Date of publication and mention of the grant of the patent: **05.06.2024**
(21) Application number: 20211254.6
(22) Date of filing: 02.12.2020
(51) Int. Cl.: B60W 30/14, B60W 50/08

(54) **A METHOD TO REDUCE ENERGY CONSUMPTION OF A VEHICLE**
VERFAHREN ZUR VERRINGERUNG DES ENERGIEVERBRAUCHS EINES FAHRZEUGS
PROCÉDÉ POUR LA RÉDUCTION DE CONSOMMATION D'ÉNERGIE D'UN VÉHICULE

(43) Date of publication of application: 08.06.2022
(73) Proprietor: VOLVO TRUCK CORPORATION, 405 08 Göteborg (SE)
(72) Inventor: CHAVRIER, Philemon, 69008 Lyon (FR); LAPERRIERE, Renaud, 69006 Lyon (FR); GONDET, Estelle, 69001 LYON (FR); IGLESIAS FERNÁNDEZ, RAÚL, Valladolid (ES)
(74) Representative: Germain Maureau

(56) References cited:
- JP-A- 2010 096 151
- US-A1- 2012 215 416
- US-A1- 2016 009 278
- US-A1- 2019 138 021

## Description

### TECHNICAL FIELD

The invention relates to a method to reduce energy consumption of a vehicle.

The invention can be applied in heavy-duty vehicles, such as trucks, buses and construction equipment. Although the invention will be described with respect to a truck, the invention is not restricted to this particular vehicle, but may also be used in other vehicles concerned by speed limitation such as buses.

### BACKGROUND

In the field of transportation industry, it is known that using the automatic cruise control leads to a better and smoother driving. This helps reducing the number of accidents and traffic jams. This also enables to reduce the fuel consumption of the vehicle. However, many drivers are not yet inclined to use Cruise control. One reason is that they feel somehow a loss of drivability or control of their vehicle.

US 9 988 049 B2 discloses a Driver Performance Assistant (DPA) system, which exhibits functionality that encourages operator behavior to provide benefits such as improved performance and improved fuel economy. The DPA system can be adapted to work with one or more vehicle subsystems, including a Predictive Cruise Control (PCC) system. For example, a DPA system can provide notifications to encourage the operator to activate a PCC system that has been deactivated. A PCC activation reminder notification may consist in displaying a message "Activating Eco-Cruise Saves Fuel" to encourage the operator to activate the PCC system. This display state appears for a brief time (e.g., 5 seconds) to avoid unnecessarily distracting the driver.

AU 2012 201462 A1 discloses an acceleration limiting system (ALS) for a motor vehicle, the ALS being configured to process signals generated by operation of a throttle of a vehicle to produce acceleration signals, which limit acceleration of the vehicle to a target maximum acceleration AM. US 2016/0009278 A1 discloses a system for the control of an actual speed of a vehicle, where the system is able to allow a manual or an automatic control of the actual speed, and to set a maximum speed limitation which is higher when the actual speed is controlled automatically.

### SUMMARY

An object of the invention is to provide a method to incite the driver to use cruise control function. The more the cruise control is activated, the better driving performance and less fuel is consumed. The invention therefore enables to educate the drivers to adopt a more ecological driving style.

The object is achieved by a method according to claim 1 and a speed limiter according to claim 4.

Further aspects of the invention which, although advantageous, are not compulsory, are defined in the claims 2, 3 and 5.

The invention also concerns a heavy-duty vehicle as defined in claim 6.

Further advantages and advantageous features of the invention are disclosed in the following description and drawings.

### BRIEF DESCRIPTION OF THE DRAWINGS

With reference to the appended drawings, below follows a more detailed description of embodiments of the invention cited as examples.

In the drawings:
Fig. 1 is a perspective view of a vehicle of the invention;
Fig. 2 is a schematic representation of a speed limiter provided on the vehicle of figure 1 ;
Fig. 3 is a perspective view of a steering wheel arrangement, next to which is provided a control stalk for activating cruise control;

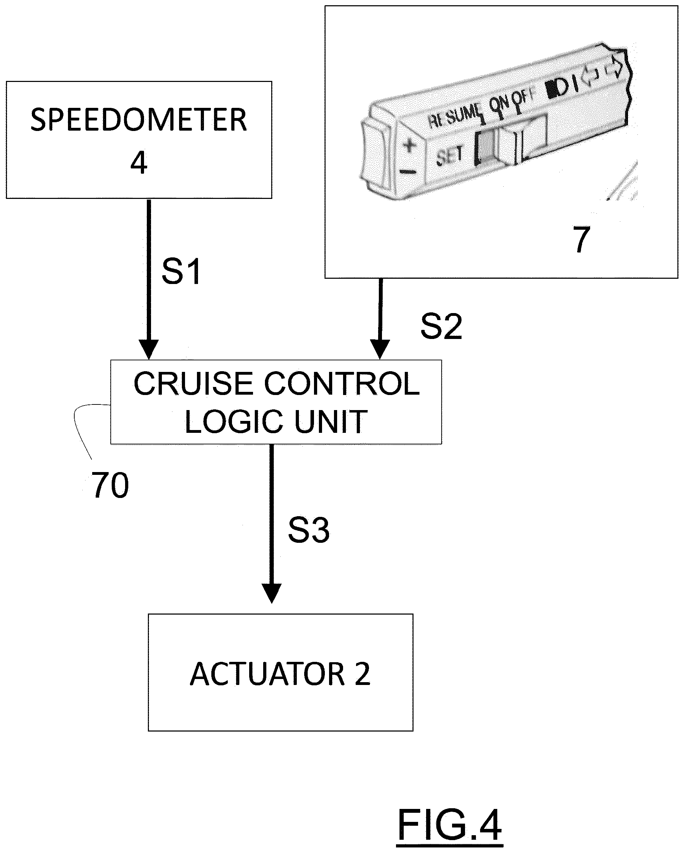

Fig. 4 is a schematic representation of cruise control functioning details;
Fig. 5 represents a vehicle dashboard from the driver perspective; and
Fig. 6 is a detailed view of figure 5 representing a button that enables the driver to directly activate cruise control at a predefined speed.

### DETAILED DESCRIPTION OF EXAMPLE EMBODIMENTS OF THE INVENTION

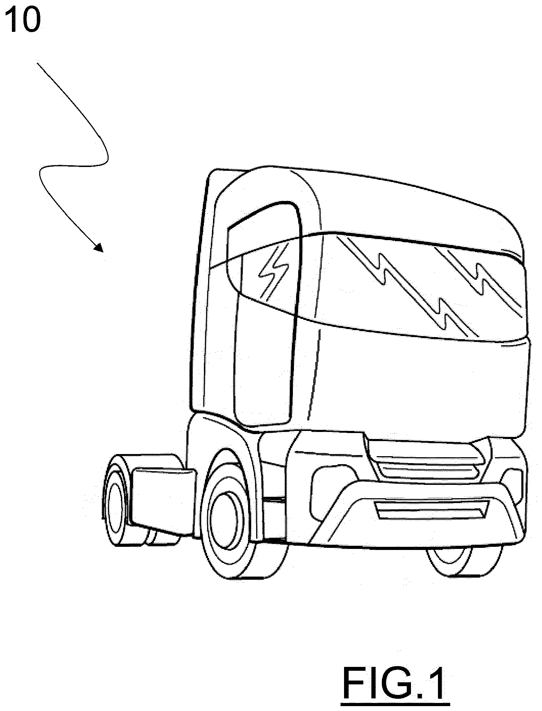

Figure 1 shows a truck 10. In a manner known per se, this type of heavy-duty vehicle has a speed limiter 1, usually electronic, which limits the speed of the vehicle below a certain limit. For example, in France, trucks (or lorries) are not allowed to exceed a speed of 90 km/h on the road. These restrictions also apply to other commercial vehicles, including buses, which are therefore also covered by the invention.

The speed limiter 1 can be considered as a spare part and therefore sold separately from the truck and the other parts of it. In other words, it is an independent module.

The speed limiter 1 is used to preselect the maximum speed at which the vehicle is allowed to be driven. On trucks equipped with Electronic Diesel Control (EDC) or electronically controlled fuel injection, a speed limiter is automatically included in the system. Trucks with radial pumps and mechanical regulators can be equipped with an electronic speed limiter connected to the injection pump.

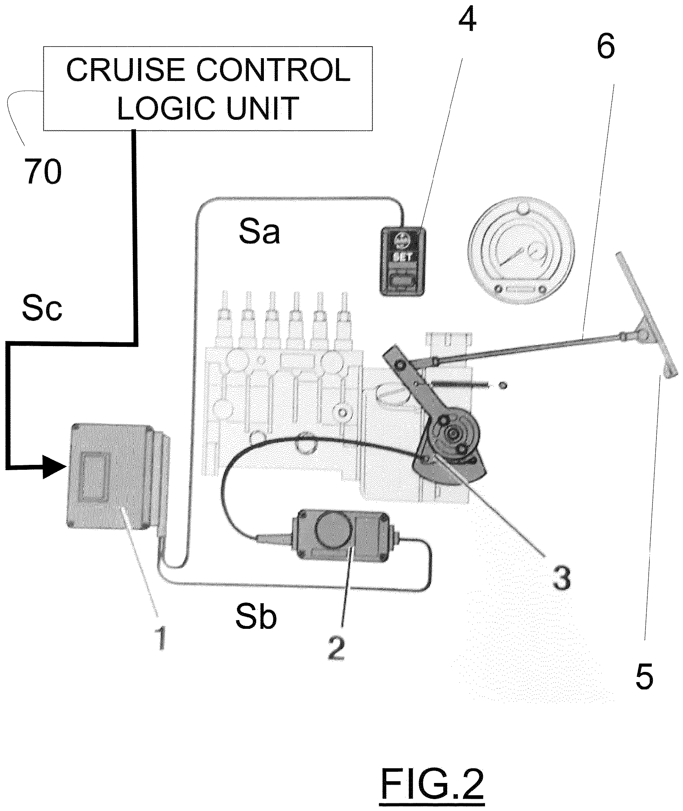

As shown on figure 2, the speed limiter 1 includes an Electronic Control Unit (ECU), which receives a speed signal Sa from a speedometer 4. If the road speed exceeds the set speed (e.g. 90 km/h), the ECU sends a signal Sb to an actuator 2. This activates a link rod 3 on the regulator so that the throttle opening on the injection pump is reduced. For the record, the link rod 3 is connected to the throttle 5 (also known as "accelerator pedal") through a cable 6.

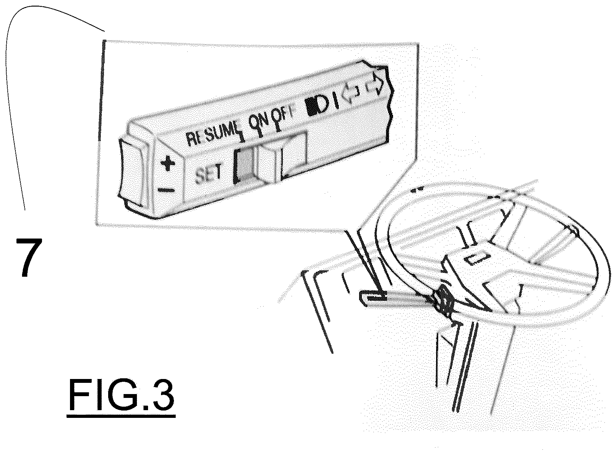

As shown on figure 3, the truck 10 further includes a cruise control (or cruise control system), thanks to which the driver can select a specified road speed, which the vehicle 10 will then attempt to maintain without the driver having to press the accelerator pedal 5. The controls (i.e. the control means, such as buttons) for the cruise control are either integrated into the turn signal stalk 7 or in the EDC system's control on the instrument panel. In order to activate cruise control, a switch is set to ON. When the vehicle reaches the required cruising speed, a button "SET" has to be pressed.

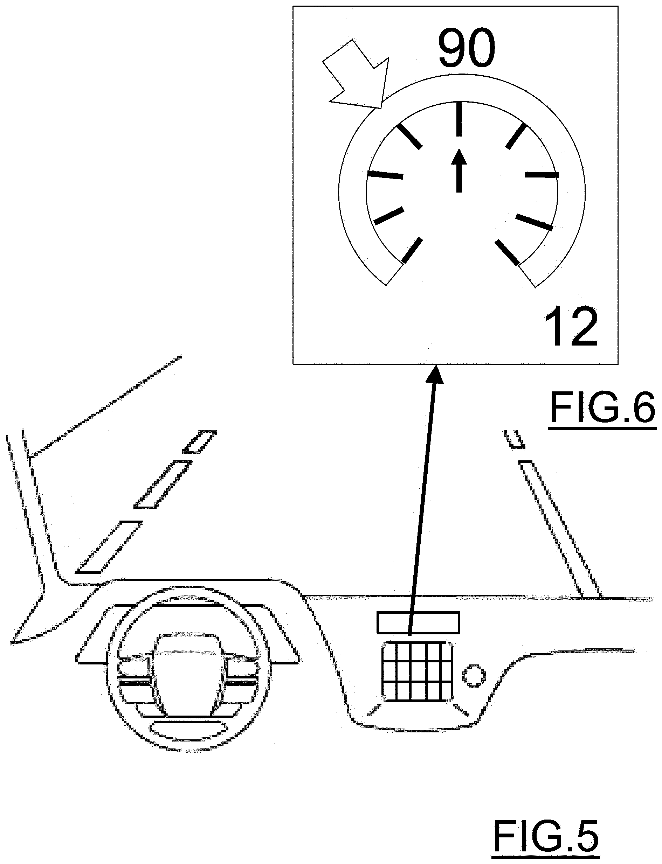

As shown on figure 5, cruise control system includes a logic unit 70 (also known as "processing unit" or "electronic control unit") that receives signals S1 and S2, respectively from the speedometer 4 and the control means (e.g. located on turn signal stalk 7). Based on these signals S1 and S2, the logic unit 70 computes a control signal S3 replacing the signal generated by the accelerator pedal module. For instance, this control signal S3 can be sent to the actuator 2 (if any) to regulate the throttle opening on the injection pump and, therefore, control engine speed & torque. This enables, accordingly, to maintain vehicle speed at the selected cruising speed.

The cruise control can be disengaged in several ways, including:
move the control (on stalk 7) to OFF,
press the clutch pedal (if any),
press the brake pedal or activate the trailer brake (if any) and,
on trucks with EDC, the cruise control is also disengaged when the exhaust bake is activated.

Obviously, even if the embodiment of the figures concerns a thermal vehicle, the invention also applies to electric vehicles (hybrid or battery-powered). In fact, electric trucks and buses are subject to the same speed restrictions as their thermal counterparts and therefore also have a speed limiter which, for example, acts to interrupt the power supply to the E-motor(s) when the vehicle reaches its maximum speed.

When activating the cruise control, the driver selects the speed to be maintained, known as cruising speed. Cruising speed generally ranges from 50 to 90 km/h in 10 km/h increments (50, then 60, 70, 80 and 90 km/h). In practice, drivers activate the cruise control on highways to automatically maintain a speed of 90 km/h. The driver can then freely release the accelerator pedal.

Since cruise control is an energy-saving feature, the purpose of the invention is to provide a method of encouraging drivers to use it to the maximum. By the terms "energy saving", it is easy to understand that it can be a matter of saving fuel (petrol, diesel, bioethanol, LPG, etc.) or preserving the battery's state of charge in the alternative embodiment where the vehicle is a Battery Electric Vehicle (BEV).

Basically, as long as the cruise control is deactivated (i.e. switched off), the speed of the vehicle 10 is restricted to a certain speed V1, lower than the maximum speed V2 allowed on the road for this type of vehicle (also known as "maximum authorized speed"). Said restriction is automatically removed when the driver activates cruise control (i.e. turns on cruise control), allowing the vehicle 10 to move faster than said certain speed V1. For example, said certain speed V1 can be a few km/h less than maximum speed, e.g. 80 km/h in countries where maximum speed V2 is 90 km/h, such as France.

According to the invention, while cruise control is deactivated, a pop up message is sent to the driver when said certain speed, e.g. 80 km/h, is reached, in order to encourage the driver to activate cruise control. This pop-up message is preferably a visual symbol or a text message that is displayed on the vehicle dashboard.

Preferably, the truck 10 comprises an electronic control unit (ECU) for achieving the above-mentioned speed limitation when cruise control is turned off. Preferably, this ECU corresponds to the above mentioned ECU included in the speed limiter 1 (which fulfills speed limitation of the vehicle below maximum authorized speed), which is represented on figure 2 . In a variant not shown, it can also hp a different ECU

The accelerator pedal position, the vehicle speed and the cruise control state (ON or OFF) are information available on the vehicle Controller Area Network (CAN bus). The speed limiter ECU uses this information to activate an existing speed limitation function. More precisely, the speed limiter ECU 1 receives a signal Sc representative of the cruise control state (ON or OFF). The speed limitation is activated as soon as the cruise control is detected as deactivated and will be a few km/h lower that the maximum authorized speed V2.

When speed limit V1 is reached a pop up shall appear to recommend the driver to use the cruise Control. Once the cruise control is detected activated, the limit will be lifted allowing the truck to reach the requested speed.

Advantageously, the electronic control unit 1 is detecting when the vehicle speed is stabilized. For example, the vehicle speed can be considered as being stable is the speedometer records the same speed value for an extended time period, e.g. a few seconds, such as 5 or 10s.

If the vehicle speed is detected as being stable, for example stabilized at 70 km/h, a pop up message is also sent to the driver for encouraging him to activate cruise control. This leads to better driving performances and tips to the driver.

According to a preferred embodiment, at least one button 12, such as the one represented on figure 6 , is provided on the dashboard (Cf. Figures 5 and >6) to enable the driver to directly activate cruise control at a predefined cruising speed, e.g. the maximum authorized speed V2 (e.g. 90 km/h).

Preferably, button 12 is a press button. Button 12 can be located directly on the steering wheel panel or on the central panel remote from steering wheel (As represented on figure 5 ).

It is to be understood that the present invention is not limited to the embodiments described above and illustrated in the drawings; rather, the skilled person will recognize that many changes and modifications may be made within the scope of the appended claims.

## Claims

1. A method to reduce energy consumption of a vehicle (10), wherein the vehicle is a truck or a bus equipped with cruise control and a speed limiter, wherein as long as the cruise control is deactivated, the speed of the vehicle is restricted, by the speed limiter, to a certain speed (V1) lower than the maximum speed (V2) authorized on the road for this type of vehicle, said method being **characterized in that** while cruise control is deactivated and as soon as said certain speed (V1) is reached, a pop-up message is sent to the driver in order to recommend the driver to activate cruise control, and upon activation of cruise control said speed restriction is automatically removed, allowing the vehicle to move faster than said certain speed (V1).

2. The method of claim 1, **characterized in that**, while cruise control is deactivated, a pop up message is sent to the driver when the vehicle speed is detected to be equal to a certain speed during a predetermined period of time, in order to recommend the driver to activate cruise control.

3. The method of claim 1 or 2, **characterized in that** said pop-up message is a visual symbol or a text message displayed on the vehicle dashboard.

4. A speed limiter (1) comprising means for carrying out the method of any previous claim, wherein said speed limiter is connected to a cruise control logic unit (70) for receiving a signal about the activation status of cruise control.

5. The speed limiter of claim 4, **characterized in that** it is configured to limit the vehicle speed to the maximum authorized speed (V2).

6. A heavy-duty vehicle (10), such as a truck or a bus, comprising cruise control and a speed limiter according to any one of claims 4 or 5.

7. The vehicle of claim 6, **characterized in that** it includes at least one button (12) that enables the driver to directly activate cruise control at a predefined speed, for example at maximum authorized speed (V2).

## Patentansprüche

1. Verfahren zur Verringerung des Energieverbrauchs eines Fahrzeugs (10), wobei es sich bei dem Fahrzeug um einen Lastkraftwagen oder einen Bus handelt, der mit einem Geschwindigkeitsregler und einem Geschwindigkeitsbegrenzer ausgestattet ist, wobei, solange der Geschwindigkeitsregler deaktiviert ist, die Geschwindigkeit des Fahrzeugs durch den Geschwindigkeitsbegrenzer auf eine bestimmte Geschwindigkeit (V1) begrenzt wird, die niedriger ist als die maximale Geschwindigkeit (V2), die für diesen Typ von Fahrzeug auf der Straße zugelassen ist, das Verfahren **dadurch gekennzeichnet ist, dass** während der Deaktivierung des Geschwindigkeitsreglers und sobald die bestimmte Geschwindigkeit (V1) erreicht ist, eine Meldung an den Fahrer gesendet wird, um ihm die Aktivierung des Geschwindigkeitsreglers zu empfehlen, und dass bei Aktivierung des Geschwindigkeitsreglers die Geschwindigkeitsbeschränkung automatisch aufgehoben wird, sodass das Fahrzeug schneller als mit der bestimmten Geschwindigkeit (V1) fahren kann.

2. Verfahren nach Anspruch 1, **dadurch gekennzeichnet, dass** bei deaktiviertem Geschwindigkeitsregler eine Meldung an den Fahrer gesendet wird, wenn während einer vorbestimmten Zeit festgestellt wird, dass die Geschwindigkeit des Fahrzeugs gleich einer bestimmten Geschwindigkeit ist, um dem Fahrer zu empfehlen, den Geschwindigkeitsregler zu aktivieren.

3. Verfahren nach Anspruch 1 oder 2, **dadurch gekennzeichnet, dass** die Pop-up-Meldung ein visuelles Symbol oder eine Textmeldung ist, die auf dem Armaturenbrett des Fahrzeugs angezeigt wird.

4. Geschwindigkeitsbegrenzer (1), umfassend Mittel zur Durchführung des Verfahrens nach einem der vorstehenden Ansprüche, wobei der Geschwindigkeitsbegrenzer mit einer Fahrtregler-Logikeinheit (70) verbunden ist, um ein Signal über den Aktivierungsstatus des Fahrtreglers zu empfangen.

5. Geschwindigkeitsbegrenzer nach Anspruch 4, **dadurch gekennzeichnet, dass** er so konfiguriert ist, dass er die Geschwindigkeit des Fahrzeugs auf die maximale zulässige Geschwindigkeit (V2) begrenzt.

6. Schwerlastfahrzeug (10), wie z. B. ein Lastwagen oder ein Bus, umfassend einen Geschwindigkeitsregler und einen Geschwindigkeitsbegrenzer nach einem der Ansprüche 4 oder 5.

7. Fahrzeug nach Anspruch 6, **dadurch gekennzeichnet, dass** es mindestens eine Taste (12) einschließt, die es dem Fahrer ermöglicht, den Geschwindigkeitsregler bei einer vordefinierten Geschwindigkeit, zum Beispiel bei der maximal zulässigen Geschwindigkeit (V2), direkt zu aktivieren.

## Revendications

1. Procédé de réduction de la consommation d'énergie d'un véhicule (10), dans lequel le véhicule est un camion ou un autobus équipé d'un régulateur de vitesse et d'un limiteur de vitesse, dans lequel, tant que le régulateur de vitesse est désactivé, la vitesse du véhicule est restreinte, par le limiteur de vitesse, à une certaine vitesse (V1) inférieure à la vitesse maximale (V2) autorisée sur la route pour ce type de véhicule, ledit procédé étant **caractérisé en ce que**, alors que le régulateur de vitesse est désactivé et dès que ladite certaine vitesse (V1) est atteinte, un message contextuel est envoyé au chauffeur afin de recommander au chauffeur d'activer le régulateur de vitesse, et lors de l'activation du régulateur de vitesse, ladite restriction de vitesse est automatiquement supprimée, permettant au véhicule de se déplacer à une vitesse supérieure à ladite certaine vitesse (V1).

2. Procédé de la revendication 1, **caractérisé en ce que**, alors que le régulateur de vitesse est désactivé, un message contextuel est envoyé au chauffeur lorsque la vitesse du véhicule est détectée comme étant égale à une certaine vitesse pendant une période de temps prédéterminée, afin de recommander au chauffeur d'activer le régulateur de vitesse.

3. Procédé de la revendication 1 ou 2, **caractérisé en ce que** ledit message contextuel est un symbole visuel ou un message textuel affiché sur le tableau de bord du véhicule.

4. Limiteur de vitesse (1) comprenant des moyens pour effectuer le procédé d'une quelconque revendication précédente, dans lequel ledit limiteur de vitesse est connecté à une unité logique du régulateur de vitesse (70) pour recevoir un signal sur l'état d'activation du régulateur de vitesse.

5. Limiteur de vitesse de la revendication 4, **caractérisé en ce qu'**il est configuré pour limiter la vitesse du véhicule à la vitesse maximale (V2) autorisée.

6. Véhicule utilitaire lourd (10), tel qu'un camion ou un autobus, comprenant un régulateur de vitesse et un limiteur de vitesse selon l'une quelconque des revendications 4 ou 5.

7. Véhicule de la revendication 6, **caractérisé en ce qu'**il inclut au moins un bouton (12) qui permet au chauffeur d'activer directement le régulateur de vitesse à une vitesse prédéfinie, par exemple à la vitesse maximale (V2) autorisée.
